# EUROPÄISCHE PATENTSCHRIFT

(11) **EP 0 438 546 B1**
(45) Veröffentlichungstag und Bekanntmachung des Hinweises auf die Patenterteilung: **27.04.1994**
(21) Anmeldenummer: 90909327.0
(22) Anmeldetag: 22.06.1990
(51) Int. Cl.: B62D 61/08, B62D 29/04, B60K 1/00

(54) **LEICHTBAU-ELEKTROMOBIL**
LIGHTWEIGHT ELECTROMOBILE
AUTOMOBILE ELECTRIQUE A STRUCTURE LEGERE

(30) Priorität: 23.06.1989 CH 2340/89
(43) Veröffentlichungstag der Anmeldung: 31.07.1991
(73) Patentinhaber: Lanker, Willi, CH-8126 Zumikon (CH)
(72) Erfinder: Lanker, Willi, CH-8126 Zumikon (CH)
(86) Internationale Anmeldenummer: CH9000151
(87) Internationale Veröffentlichungsnummer: WO9100209

(56) Entgegenhaltungen:
- EP-A- 0 124 372
- EP-A- 0 184 177
- FR-A- 972 290
- FR-A- 1 060 325
- FR-A- 1 138 186
- FR-A- 2 559 119
- US-A- 4 574 902
- US-A- 4 705 716
- Automotive Engineering, Band 93, Nr. 5, Mai 1985, (Warrendale, Pennsylvania, US),"Motor-assist trike presages hybrid electric cars", Seite 92

## Beschreibung

Die Erfindung betrifft ein Leichtbau-Elektromobil mit zwei Vorderrädern und einem Hinterrad. Solche Mobile sind seit einigen Jahren in Zusammenhang mit Solarmobilrennen bekannt geworden. Ein von der Firma Horlacher AG in Möhlin hergestelltes und für den Strassenverkehr zugelassenes Elektromobil weist eine selbsttragende faserverstärkte Kunststoff-Karosserie auf, welche gleichzeitig die Aussenform bildet und alle Belastungskräfte aufnehmen muss. Zur Erreichung einer genügenden Seitenstabilität und einer geringen Frontfläche weist es freistehende Vorderräder mit grosser Spurweite auf. Diese könnten jedoch im Verkehr leicht übersehen werden und ergeben überdies eine relativ grosse Fahrzeugbreite. Die bekannten Leichtbaumobile weisen immer noch einen Verbrauch von mindestens 50 Wh pro km bei normalen Personenwagengeschwindigkeiten von 80 km/h auf. Auch können sie praktisch noch kaum im normalen Verkehr mithalten und sind aber anderseits, bedingt durch ihre Breite, auch nicht leicht überholbar. Auch ist deren Sicherheit insgesamt noch nicht befriedigend. Die geringe Energie-Dichte der heutigen Batterien beschränkt dabei die möglichen Fahrleistung und Reichweiten ganz massiv.
Es sind auch selbsttragende Kunststoffkarosserien bekannt. So offenbart die EP 0184 177 A3 eine für Elektro-Fahrzeuge verwendbare, relativ breite selbsttragende Karosserie, welche aus einer unverstärkten Kunststoffschale mit integrierten Metall-Profilen besteht, z.B. zur Verwendung als Müllabfuhrauto. Diese Bauweise ergibt aber nur eine geringe Festigkeit, und sie eignet sich nicht für schnelle Elektromobile.

Analoges gilt auch für die folgenden beiden bekannten Fahrzeuge mit Verbrennungsmotoren: Die FR-A-1138186 offenbart ein Fahrzeug mit einer selbsttragenden Karosserie, bestehend aus einer unteren und einer oberen elliptischen Kunststoffhalbschale. Fahrwerk und Motor sind an der unteren Schale befestigt; dies ergibt aber eine ausgesprochen schwache Konstruktion, welche auch keine schweren Batterien aufnehmen könnte. Die FR-A-1060325 beschreibt ein Fahrzeug mit Zentralrohrrahmen, der Fahrwerk und Motor trägt und auf welchen eine relativ schwache Karosserie aufgesetzt ist. Dieses Konzept ergibt auch keinen Kollisionsschutz für den Fahrer. Beide Fahrzeuge sind mit ihrer tragenden Struktur überdies relativ breit ausgeführt, was zusammen mit ihrem aerodynamisch ungünstigen Oberteil auch einen hohen Luftwiderstand ergibt.

Es ist daher Aufgabe der vorliegenden Erfindung, ein Leichtbau-Elektromobil zu schaffen, welches im schnellen Alltagsverkehr im regionalen Bereich ohne gegenseitige Behinderung im Verkehrsfluss mitfahren kann. Es soll insbesondere dem alleinfahrenden Pendler ermöglichen, im wesentlichen gleich schnell wie mit dem Auto zur Arbeit zu fahren. Dabei sollen möglichst geringer Energieverbrauch und hohe Gesamtsicherheit, im speziellen auch gegenüber den schwächeren Verkehrsteilnehmern wie Fussgänger, Velofahrer und Kinder, erreicht werden. Insgesamt soll eine wesentlich verbesserte Kombination der wichtigsten Eigenschaften: Fahrleistungen, Verbrauch, und damit der hohen Batteriekosten, Gesamtsicherheit und Beanspruchung von Verkehrsfläche erreicht werden.

Diese Aufgabe wird dadurch gelöst, dass das erfindungsgemässe Leichtbau-Mobil ein tragendes, steifes, schmales und schalen- bzw. kastenförmiges Chassis mit mindestens einer vorderen und einer hinteren Querverbindung, Seitenwänden sowie einem flächenförmigen Boden aufweist, wobei das Chassis den Fahrer als Sicherheitsschale umgibt, dass die Vorderräder beidseitig des Chassis mit einem seitlichen Abstand zur Seitenwand des Chassis angeordnet und am Chassis angelenkt sind, und dass eine separate leichte Kunststoffkarosserie mit dem Chassis verbunden ist, welche eine strömungsgünstige, schlanke und alle Räder bedeckende Aussenform bildet.
Diese Kombination ergibt sowohl sehr niedriges Gewicht als auch geringen Luftwiderstand, somit minimalen Energieverbrauch und damit wiederum weniger notwendiges Batteriegewicht. Dank grosser Wendigkeit und Schlankheit kann das Mobil einem drohenden Zusammenstoss (mit Auto oder Fussgänger) rasch und auf kleinstem Raum ausweichen. Die geringe Breite als mit Abstand wichtigstem Kriterium der Verkehrsflächen-Beanspruchung ermöglicht es im Prinzip, dass auf einer normalen Fahrspur zwei erfindungsgemässe Mobile nebeneinander Platz finden. So erreicht das Mobil mit der geringen benötigten Verkehrsbreite eines Mofas praktisch normale Personenwagen-Transportgeschwindigkeit. Dies ergibt eine massiv reduzierte Beanspruchung von Verkehrsfläche auf rund die Hälfte. Auch das Ueberholen wird erleichtert und ungefährlicher, sowohl für schneller Fahrende als auch von Velofahrern durch das Mobil bei Gegenverkehr. Die gegenseitige Behinderung wird so stark verringert. Die benötigte Parkfläche beträgt weniger als die Hälfte derer eines Personenwagens.
Die abhängigen Ansprüche betreffen besonders günstige Ausführungsformen der Erfindung. Danach ergibt ein flacher, tiefliegender Chassisboden einen besonders tiefen Schwerpunkt mit entsprechend guter Strassenlage. Vorzugsweise kann die maximale Breite des Chassis höchstens 70 cm (beispielsweise 60 - 65 cm) und die maximale Breite der Karosserie, welche durch die Vorderräder voll ausgenützt wird, höchstens 110 cm (beispielsweise sogar nur 100 cm) betragen. Das Chassis kann vorne keilförmig verjüngt und sein Boden nach vorn kufenartig angehoben sein. Ausserhalb des Chassis liegende Radaufhängungen wie auch Chassisanbauten können eine geringere Festigkeit als das Chassis aufweisen, z.B. in Form von Sollbruchstellen gegen einen schweren Schlag von vorne. Dann können die aussenliegenden Teile der Aufhängung wie auch die seitlichen Halbschalen einer längsgeteilten Karosserie bei einem Zusammenstoss abgerissen werden und das Chassis als Sicherheitszelle um den Fahrer herum ohne Deformation weiterrutschen und damit langsam abgebremst werden.
Als hochfeste Leichtbau-Werkstoffe für das Sicherheits-Chassis können mit technischen Endlosfasern wie Kohle, Aramid oder Glas verstärkte Kunststoffe eingesetzt werden. Geeignete Kunststoffe sind Duroplaste wie Epoxide und Polyester oder Thermoplaste wie PPS, PES, PEI, PSU, PP, PA und PEEK. Ein besonders leichtes und steifes Chassis kann aus einem Sandwich mit zwei hochfesten Deckschichten und einem dazwischen liegenden leichten Stützkern aus Schaumstoff, Wabenmaterial oder Gestrick aufgebaut werden. Dazu können z.B. Platten aus zähem PVC-Schaum in 1 bis 2 cm Dicke thermisch umgeformt und mit C-A-Mischgewebe und Epoxidharz beschichtet werden. Die Faserverstärkung kann dabei mittels integrierter Kohle-Rovings fachwerkartig den Belastungen angepasst und damit das Chassis versteift werden. Auch aus Aluminium-Wabenplatten, z.B. Aerolam von Ciba, können kastenförmige Chassis aufgebaut werden. Durch tropfenförmige Ausbildung der Karosserie, sowohl des Grundkörpers als auch der Cockpit-Haube können minimale Luftwiderstandsbeiwerte wie auch geringe Querschnittsflächen erreicht werden. Durch Anordnung der Batterien im Bereich der Vorderräder auf dem Chassisboden kann eine günstige und gleichmässige Gewichtsverteilung auf alle drei Räder erreicht werden. Als einfache und leichte Federungselemente eignen sich Kunststoffe wie Polyurethan-Elastomere oder mit Kohle oder Glas verstärkte Kunststoffe. Durch eine mehrfache Federung der Teilmassen Chassis, Batterie und Fahrer können schon mit kleinen Federwegen gute Fahr- und Feder-Eigenschaften erreicht werden. Ein unter den Fahrerbeinen angebrachter Lenker mit sehr direkter Lenkungsübersetzung kann ein besonders rasches, präzises Steuern und Ausweichen ermöglichen. Durch Kombination des Antriebs mit einer Verbund-Hinterradschwinge und einer Federabstützung kann eine besonders leichte und kompakte Baueinheit gebildet werden. Mit einem stufenlosen automatischen Drehmomentwandler-Antrieb, wie z.B. im SSES Tagungsband: Solarfahrzeuge, Bern 1985, S. 129 erläutert, können ein besonders günstiges Leistungsgewicht und hohe Beschleunigung erzielt werden.

Im folgenden wird die Erfindung anhand von Ausführungsbeispielen und Figuren weiter erläutert. Es zeigen:
- Fig. 1: ein erfindungsgemässes Mobil in verschiedenen Ansichten,
- Fig. 2: eine Variante mit verjüngter Front,
- Fig. 3: einen schalenförmigen Chassisquerschnitt,
- Fig. 4: eine Variante der Batterieanordnung,
- Fig. 5: eine Vorderradaufhängung,
- Fig. 6: eine Hinterradschwinge mit Antrieb.
- Fig. 7: das Grundprinzip des Mobils
- Fig. 8: eine Einstiegsvariante.

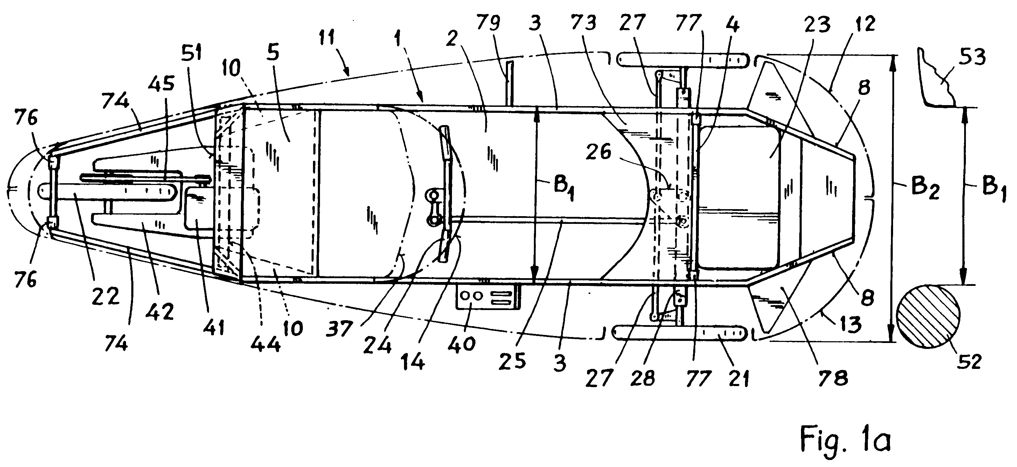

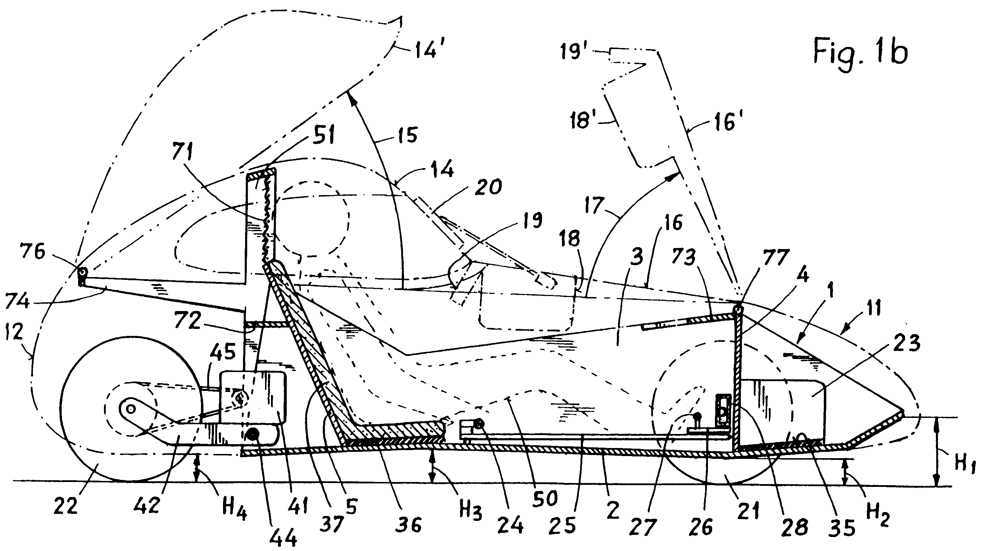

Ein erfindungsgemässes Leichtbau-Elektromobil wird in drei Ansichten von Fig. 1 a) bis c) illustriert. Ein tiefliegendes, steifes kastenförmiges Chassis 1 weist einen Boden 2, Seitenwände 3 und versteifende Querverbindungen in Form von Querwänden 4 und 5 auf, welche den Fahrer 50 umgeben. Die vordere Querwand 4 nimmt Kräfte der Aufhängungen der Vorderräder 21 und der Batterie 23 auf. Diese Wand trennt zudem auch den Fahrer-Innenraum 6 gegen die Batterie ab, was z.B. bei einer Havarie wünschbar ist. Die hintere Querwand 5 nimmt die Kräfte von Fahrergewicht, Hinterradaufhängung 42 und Motor 41 auf und dient gleichzeitig als Rückenstütze für eine leichte Fahrersitzschale 37, z.B. aus 1 mm dickem Kevlar- oder Glas-Epoxy Verbund. Auch Sicherheitsgurten können an der hinteren Querwand abgestützt sein. Eine separate Karosserie 11 wird auf das Chassis 1 abgestützt und mit diesem verbunden, z.B. mittels Silikonkautschuk oder durch Verschraubung. Sowohl ihr Grundkörper als auch eine Cockpithaube 14 sind tropfenförmig und damit strömungsgünstig ausgebildet. Der Platz zwischen Chassis 1 und Karosserie 11 kann als Stauraum und für verschiedene Installationen wie z.B. ein elektrisches Schaltbrett 40 genutzt werden. Zum Aussteigen kann die Haube 14 in Richtung 15 nach oben geklappt werden. Zum Offenfahren ist sie abnehmbar. Dann kann das Mobil durch eine kleine Windschutzscheibe und eine hinter dem Fahrer liegende Abdeckung in einen Spyder verwandelt werden. Ein Überrollbügel oder Überrollbogen 51 ist ebenfalls ins Chassis 1 integriert. Als Kopfstütze 71 dient ein im Überrollbügel aufgespanntes Netz. Zur Erleichterung des Einstiegs ist als Teil der Karosserie ein Deckel 16 mit einem Türausschnitt 18 vor dem Fahrer nach vorn hochklappbar in Richtung 17 angebracht. Der Deckel 16 trägt dabei auch ein Armaturenbrett 19 und einen Scheibenwischer 20, welcher abnehmbar sein kann.

Zur weiteren Verstärkung des Chassis dienen eine Deckenversteifung als Querrippe 72 hinten und eine Deckenversteifung 73 vorn. Eine Chassisverlängerung 74 nach hinten trägt die Haube 14, welche durch das Gelenk 76 am Chassis fixiert ist. Der Deckel 16 ist über das Gelenk 77 ebenfalls am Chassis befestigt. Es können auch äussere Anbauteile am Chassis angebracht sein wie die Radabweiser 78 oder die Karosseriehalterung 79, welche jedoch eine geringere Festigkeit als das Chassis selber aufweisen.

Dank der geringen, durch die Vorderräder bestimmten maximalen Breite B2 der Karosserie von ca. 1 m (z.B. 100 bis 115 cm) und der noch geringeren Breite B1 des Chassis kann das Mobil, bzw. dessen Sicherheitszellen-Chassis 1 bei einem drohenden Zusammenstoss auch noch durch eine sehr schmale Lücke hindurch entweichen. Im Extremfall durch eine Lücke mit einer Breite B1 von 60 - 70 cm, z.B. zwischen einem Baum 52 und einem entgegenkommenden Auto 53 hindurch. Die Radaufhängungen und der aus zwei Halbschalen 12, 13 (Fig. 1 c) bestehende Karosserieunterteil werden dabei ohne Deformation des Chassis und des Fahrers abgerissen. Die über dem Chassis liegenden Karosserieteile Deckel und Haube sind mit dem Chassis fest verbunden und verstärkt, so dass sie dabei auch nicht abgerissen werden. Der Boden 2 des Chassis weist unterschiedliche Höhen auf. Um einen möglichst tiefen Schwerpunkt mit ausreichender Bodenfreiheit zu erreichen, betragen z.B. H4 = 12 cm, H3 = 14 cm und H2 = 10 cm. Der Bug ist kufenartig hochgezogen auf H1 = 25 cm, was ein allfälliges Rutschen auf der Chassisnase ermöglicht (auch ohne Vorderräder). Das Chassis weist vorne (8) und hinten (10) keilförmige Verjüngungen auf.

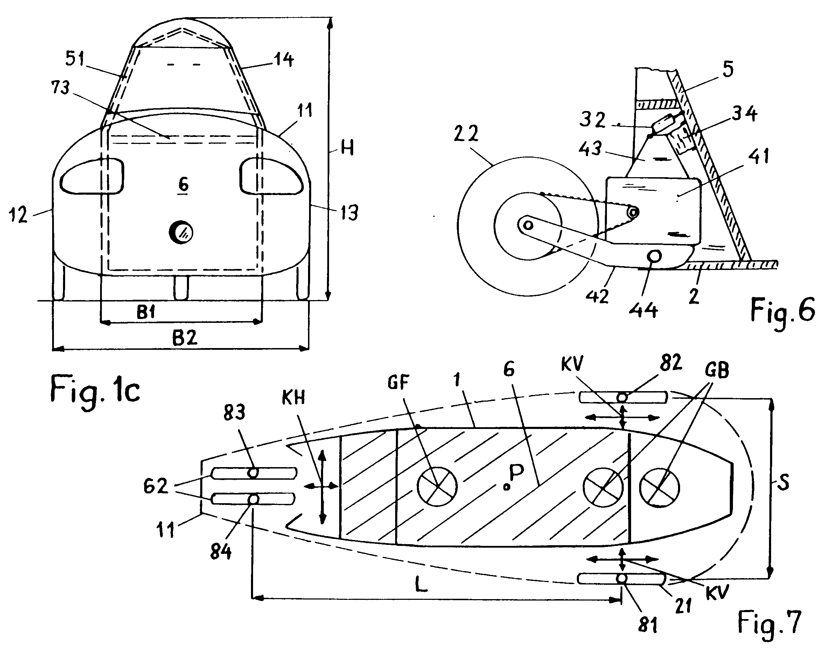

Die Prinzipskizze von Figur 7 verdeutlicht das Grundprinzip des erfindungsgemässen Mobils. Das schmale Chassis nimmt
1. alle Kräfte auf, dies sind Kräfte der Vorderräder und Radaufhängungen KV, jene der Hinterräder KH Sowie die Massenkräfte von Fahrer GF und Batterie GB und
2. bildet gleichzeitig eine Sicherheitszelle mit Innenraum 6 (schraffiert) für den Fahrer, mit geringstmöglichen Abmessungen, d.h. minimaler Breite B1.

Das Hinterrad kann auch als Doppelrad 62, (z.B. mit einem Abstand von 10 cm) ausgeführt sein, ohne die strömungsgünstige Form der Karosserie 11 zu beeinträchtigen. Wichtig ist, dass alle Räder mit den Aufstandspunkten 81, 82 vorn und 83, 84 hinten an der äussersten, durch die Karosserie gegebenen Begrenzung liegen, so dass eine grosse Vorderspur S, von z.B. 95 - 105 cm, grosser Radstand L, von z.B. 180 - 200 cm, und damit grosse Aufstandsfläche und sehr gute Strassenhaltung erreicht werden können. Der Schwerpunkt P, inklusive Fahrer, liegt idealerweise um ca. 30 - 35% von L hinter der Vorderachse.

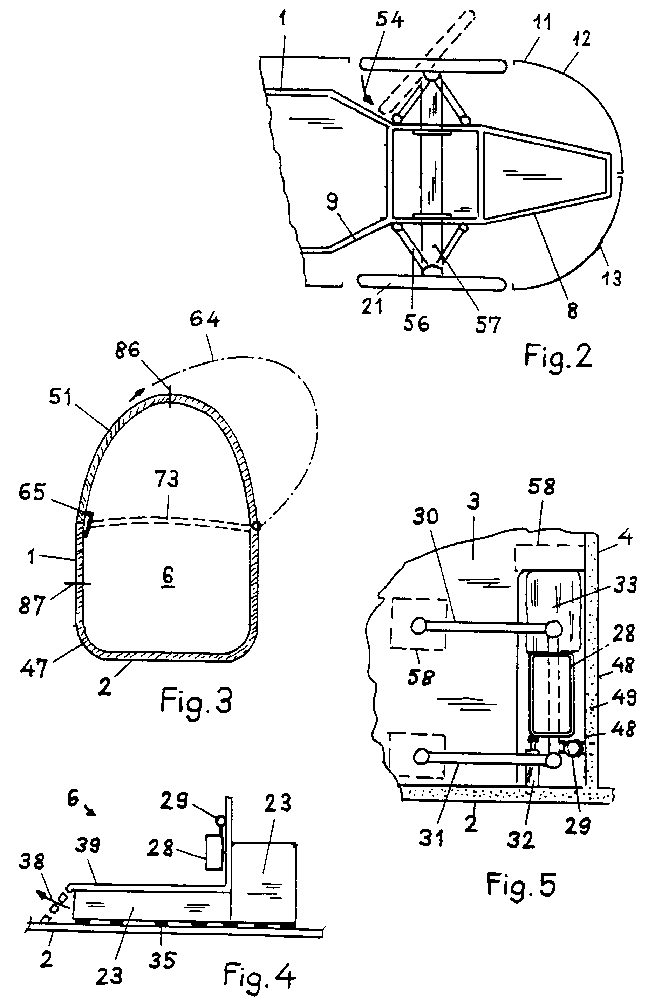

In einem weiteren Beispiel von Figur 2 weist das Chassis eine erste Verjüngung 9 zur Erhöhung des Radeinschlags 54 und zur Aufnahme einer Dreieckslenker-Aufhängung 56 sowie eine weitere Bugverjüngung 8 auf. Anstelle von doppelten Dreiecksquerlenkern kann auch ein oberer Dreieckslenker 56 mit einer unteren radführenden, faserverstärkten Querblattfeder 57 gebildet werden. Die Kräfte von Radaufhängungen mit Federungen werden jeweils durch Verstärkungseinsätze im Chassis 1 aufgenommen (Fig. 5). Die Fahrzeughöhe H von ca. 1 bis 1.1 m entspricht etwa jener schneller, niedriger Sportwagen.
Ein unter den Beinen befindlicher veloartiger Lenker 24 ermöglicht präzises, rasches Lenken und vermeidet gefährliche Lenkradverletzungen des Fahrers. Ueberdies ist es auch möglich, über den Lenker hinwegzurutschen und den Kopf einzuziehen, sodass die ganze Person durch die 45 bis 55 cm hohe Vorderwand 4 geschützt ist. Der Lenker 24 betätigt über eine Lenkstange 25 und einen Umlenkhebel 26 die Spurstangen 27 der Vorderräder. Das Mobil von Fig. 1 weist, wie in Fig. 5 weiter illustriert, eine vordere Starrachse aus einem leichten Alu-Rechteckprofilrohr 28 mit je zwei Längslenkern 30, 31 und einem Querlenker 29 auf. Die Aufhängungskräfte werden von Verstärkungen 58 ins Chassis eingeleitet. Der Querlenker 29 kann relativ hoch liegend über dem Vorderachsrohr (Fig. 4) auf etwa der Höhe des Gesamtschwerpunktes inkl. Fahrer angebracht sein, womit eine Stabilisatorwirkung erzielt und die Kurvenneigung weitgehend reduziert wird. Ein leichtes Kunststoff-Element 33 aus Polyurethanschaumstoff-Elastomer dient als Federung, ergänzt durch einen nur 90 g schweren hydraulischen Dämpfer 32. Analog dazu ist auch die Hinterradaufhängung von Fig. 6 über ein Polyurethan-Federelement 34 auf die Rückwand 5 abgestützt. Die Schwinge 42 des Hinterrads 22 aus C-verstärktem Sandwich-Verbund-Kunststoff ist abgewinkelt, so dass die darauf liegende Antriebseinheit 41 mit integrierter Federabstützung 43 tief zu liegen kommt. Der Antriebsschwerpunkt liegt dabei direkt über einer im Chassis 1 gelagerten Hohlwelle 44 als Drehachse und möglichst nahe an dieser Drehachse.
Um höhere Traktion zu erreichen, können auch beide Vorderräder mit je einem leichten Motor angetrieben werden.
Ein in Fig 3 im Querschnitt gezeigtes schalenförmiges Chassis 47 weist ein teilweise geschlossenes Profil mit Überrollbogen 51 und vorderer Deckenversteifung 73 auf, welche die Festigkeit und Steifigkeit der Sicherheitszelle weiter erhöhen. Zum Einstieg kann hier die am Chassis fixierte Haube 64 seitlich über den Überrollbügel hochgeschwenkt werden (Gelenk 76). Im geschlossenen Zustand wird die Haube 64 am Chassis verriegelt (65). Eine seitliche Karosserietüre kann auch oben am Bügel 51 an der Stelle 86 angelenkt sein und bis zur Stelle 87 hinunter reichen. Fig. 5 illustriert einen Aufbau des Chassis im Sandwich-Verbund. Dieser besteht aus zwei hochfesten FVK-Deckschichten 48 auf einem leichten Stützkern 49, z.B. aus Schaumstoff oder Aramid-Wabengewebe (Nomex). Auch Alu-Sandwich-Platten (Aerolam) sind dafür geeignet und ergeben hohe Steifigkeiten. Sehr gute mechanische Eigenschaften bei günstigen Formgebungs- und Herstellverfahren werden mit faserverstärkten Thermoplasten, vor allem auch in Sandwichform, erreicht. Im Prinzip kann auch ein Rohrrahmen-Fachwerk, kombiniert mit Platten, z.B. mit mindestens einer Bodenplatte, gebildet werden, dies ergibt jedoch weniger gute mechanische Eigenschaften als echte Schalenbauweise. Anstelle von Querwänden können die Querverbindungen z.B. auch aus Profilen bestehen. Sehr leichte Karosserien können ebenfalls aus faserverstärkten Duroplasten oder Thermoplasten, im speziellen mit Aramid- oder Glasverstärkung aufgebaut werden. Die notwendige Formfestigkeit, besonders in flachen Bereichen, kann mit Verrippungen oder durch Sandwichaufbau erreicht werden, z.B. zwei 0.5 mm dicke Aramid Deckschichten auf 5 mm dickem Leichtschaumkern.

Zur Erreichung einer optimalen, gleichmässigen Gewichtsverteilung sind die Batterien 23 im Bereich der Vorderräder und tiefliegend angeordnet. Bei einem weiteren Beispiel der Batterieanordnung von Fig. 4 liegt ein Teil der Batterie 23 vor der Vorderwand 4 und ein Teil hinter der Wand 4, flach auf dem Chassisboden 2, durch einen zweiten Boden 39 vom Fahrerraum getrennt. Die Batterien können anforderungsgemäss isoliert oder belüftet werden (38). Gute Fahreigenschaften können auch durch mehrfache Federung der einzelnen Teilmassen (z.B. Leerfahrzeug 70 kg, Batterien 50 kg, Fahrer 70 kg) erreicht werden. Dabei werden die Batterien 23 und der Fahrersitz 37 zusätzlich zur Fahrzeugfederung noch in vertikaler Richtung z.B. durch PUR-Schaumstoffelemente von 1 cm Dicke 35,36 (Fig. 1 b) gefedert und gedämpft.

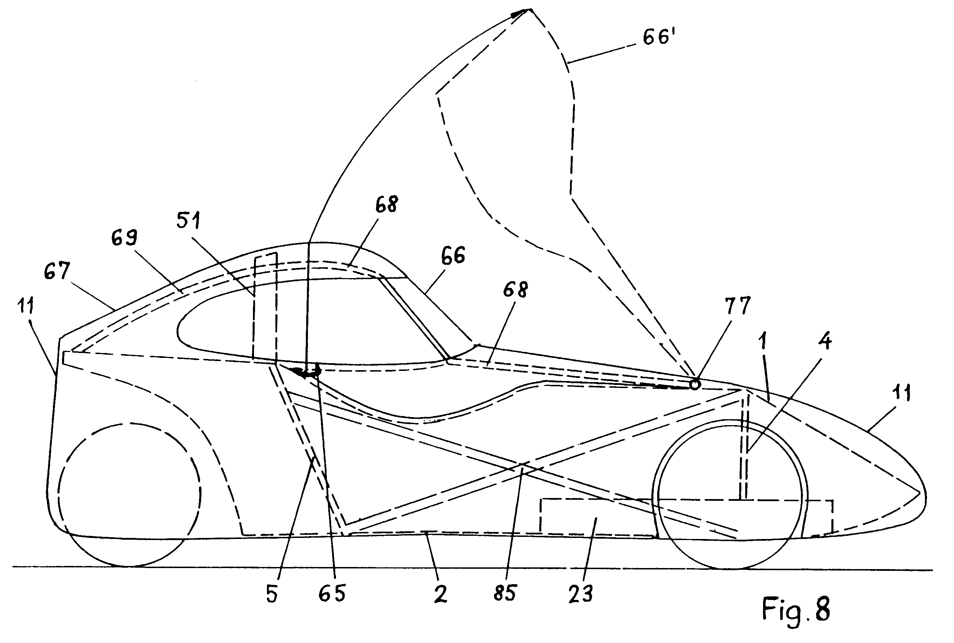

Fig. 8 zeigt eine weitere Variante mit einem hochklappbaren Deckelteil 66, mit integrierter Frontscheibe und Haubenvorderteil als Einstiegsöffnung. Dieser Deckelteil 66 weist eine Verstärkung 68 auf und ist über ein starkes Gelenk 77 schwenkbar mit dem Chassis 1 verbunden. Der hintere Haubenteil 67 ist ebenfalls verstärkt und mit Chassis 1 und Überrollbügel 51 fest verbunden. Im geschlossenen Zustand wird der Deckelteil 66 am Chassis verriegelt (65). Das Chassis ist durch ein integriertes Kohlefaser-Fachwerk 85 zusätzlich versteift.

Mit einem erfindungsgemäss gebauten Mobil kann schon mit heutigen, serienmässigen Batterien, z.B. mit 50 kg NC-Zellen, Typ RSH 7 Ah von Varta, und einem Automatwandlerantrieb, RS 2000 von Delta AG, Solothurn, von 3 kW Leistung bei 60 V, ein Fahrzeugleergewicht ohne Batterien von 70 bis 80 kg, eine Spitzengeschwindigkeit von 90 bis 100 km/h, eine Steiggeschwindigkeit von 50 km/h bei 8%, eine Reichweite von 50 bis 60 km und ein Verbrauch von nur 25 Wh/km (bei 80 km/h) erreicht werden. Damit kann ein Pendler im Regionalbereich gleich schnell wie mit dem Auto an den Arbeitsort gelangen. Mit in Entwicklung befindlichen leichteren Batterien, wie z.B. mit Nickel-Hydrid oder Lithium-Polymer Batterien, bzw. Akkus, können die Leistungen, Gewicht und vor allem Reichweite des erfindungsgemässen Mobils künftig noch wesentlich verbessert werden. Als elektrischer Speicher können auch Brennstoffzellen mit zugehörigem Brennstoff verwendert werden. Obwohl primär als Monoposto ausgelegt, kann beim erfindungsgemässen Konzept auch ein Notsitz als Sozius hinter dem Fahrer vorgesehen werden (mit entsprechend leicht vergrösserter Spur und Radstand).
Als Monoposto ausgelegt, d.h. immer mit genau einer Person besetzt, ist das Fahrgewicht weitgehend festgelegt, mit nur geringen Schwankungen von 5 - 10%. Damit können Spur und Radstand optimal gewählt, das Fahrwerk und die Federungscharakteristik sehr genau und optimal eingestellt werden, was zusammen mit dem tiefen Gewicht eine überdurchschnittlich gute Strassenlage und hohe Fahrsicherheit ergibt. Gut sichtbare, auffallende Farben erhöhen die Sicherheit. Grau wäre ungeeignet - es passt auch nicht zum Charakter des Mobils.

## Patentansprüche

1. Leichtbau-Elektromobil mit zwei Vorderrädern und einem Hinterrad, dadurch gekennzeichnet, dass das Fahrzeug ein tragendes, steifes, schmales, schalen-bzw. kastenförmiges Chassis (1) mit mindestens einer vorderen und einer hinteren Querverbindung (4,5), Seitenwänden (3) sowie einem flächenförmigen Boden (2) aufweist, wobei das Chassis den Fahrer als Sicherheitsschale umgibt, dass die Vorderräder beidseitig des Chassis mit einem seitlichen Abstand zur Seitenwand des Chassis angeordnet und am Chassis angelenkt sind, und dass eine separate leichte Kunststoffkarosserie (11) mit dem Chassis verbunden ist, welche eine strömungsgünstige, schlanke und alle Räder bedeckende Aussenform bildet.

2. Elektromobil nach Anspruch 1, dadurch gekennzeichnet, dass das Hinterrad als Doppelrad (62) ausgeführt ist.

3. Elektromobil nach Anspruch 1, gekennzeichnet durch einen flachen Chassisboden (2), welcher nicht durch die Karosserie überdeckt wird.

4. Elektromobil nach Anspruch 1, dadurch gekennzeichnet, dass die maximale Breite des Chassis (1) höchstens 70 cm und die maximale Breite der Karosserie (11) höchstens 110 cm beträgt.

5. Elektromobil nach Anspruch 1, dadurch gekennzeichnet, dass die Räder vorne seitlich und hinten am äussersten Rand der Karosserie angeordnet sind.

6. Elektromobil nach Anspruch 1, dadurch gekennzeichnet, dass das Chassis mindestens vorne seitlich verjüngt (8,9) ausgebildet ist und dass der Chassisboden kufenartig nach vorne ansteigt (H1).

7. Elektromobil nach Anspruch 1, dadurch gekennzeichnet, dass es einen ins Chassis integrierten Überrollbügel (51) aufweist.

8. Elektromobil nach Anspruch 1, dadurch gekennzeichnet, dass die die Chassis-Sicherheitszelle (1) überdeckenden Teile der Karosserie Verstärkungen (68, 69) aufweisen und mit dem Chassis verbunden sind (76, 77).

9. Elektromobil nach Anspruch 1, gekennzeichnet durch ein Chassis aus hochfestem Leichtbauwerkstoff, insbesondere aus mit technischen Endlosfasern wie Kohle, Aramid oder Glas verstärkten Duroplasten oder Thermoplasten.

10. Elektromobil nach Anspruch 1, dadurch gekennzeichnet, dass das Chassis in Kunststoff integrierte, fachwerkartige Verstärkungen (85) aus unidirektionalen Kohlebändern aufweist.

11. Elektromobil nach Anspruch 1, dadurch gekennzeichnet, dass das Chassis aus einem Sandwich (47) von zwei hochfesten Deckschichten (48) mit einem dazwischenliegenden leichten Kern (49), z.B. aus Schaumstoff oder Wabenmaterial besteht.

12. Elektromobil nach Anspruch 1, dadurch gekennzeichnet, dass die Karosserie (11) aus aramid- oder glasfaserverstärktem Duroplast oder Thermoplast besteht.

13. Elektromobil nach Anspruch 1, dadurch gekennzeichnet, dass die Karosserie (11) mindestens teilweise aus einem faserverstärkten Kunststoffsandwich mit Stützkern besteht.

14. Elektromobil nach Anspruch 1, dadurch gekennzeichnet, dass die Karosserie zwei längsgeteilte seitliche Halbschalen (12,13), einen Deckel (16) und eine abnehmbare Haube (14) aufweist.

15. Elektromobil nach Anspruch 1, dadurch gekennzeichnet, dass die Karosserie einen tropfenförmigen Grundkörper (12, 13) und eine tropfenförmige Haube (14) aufweist.

16. Elektromobil nach Anspruch 1, dadurch gekennzeichnet, dass die Einstiegsöffnung durch eine nach hinten aufklappbare Haube (14) und/oder einen nach vorne öffnenden Deckelteil (16, 66) gebildet wird, welche beide am Chassis verankert sind (76, 77).

17. Elektromobil nach Anspruch 1, dadurch gekennzeichnet, dass die Einstiegsöffnung durch eine am Chassis befestigte, seitlich hochklappbare Haube (64) gebildet wird.

18. Elektromobil nach Anspruch 1, dadurch gekennzeichnet, dass die ausserhalb des Chassis liegenden Radaufhängungen und Anbauteile (78, 79) eine geringere Festigkeit als die Chassis-Sicherheitszelle aufweisen.

19. Elektromobil nach Anspruch 1, dadurch gekennzeichnet, dass die Batterien (23) im Bereich der Vorderräder auf dem Chassisboden (2) angebracht und durch eine Wand (4, 39) vom Fahrer-Innenraum getrennt sind.

20. Elektromobil nach Anspruch 1, gekennzeichnet durch eine Kunststoff-Federung (33, 34), z.B. aus Polyurethan-Elastomeren oder aus unidirektionalem Faserverbundmaterial (57).

21. Elektromobil nach Anspruch 1, gekennzeichnet durch eine mehrfache Federung (33, 34, 35, 36) der Teilmassen Chassis, Batterie und Fahrer.

22. Elektromobil nach Anspruch 1, gekennzeichnet durch einen unter den Fahrerbeinen liegenden Lenker (24).

23. Elektromobil nach Anspruch 1 mit Hinterradantrieb, dadurch gekennzeichnet, dass der Antrieb (41) mit einer Hinterradschwinge (42) und einer Federabstützung (43) eine Baueinheit bildet.

24. Elektromobil nach Anspruch 1, dadurch gekennzeichnet, dass beide Vorderräder (21) durch je einen Motor angetrieben sind.

25. Elektromobil nach Anspruch 1, gekennzeichnet durch einen stufenlosen automatischen Drehmomentwandler-Antrieb (41).

26. Elektromobil nach Anspruch 1, dadurch gekennzeichnet, dass die Aussenform in Fahrrichtung keine verletzenden, harten oder schweren Teile aufweist.

## Claims

1. A lightweight electric vehicle comprising two front wheels and a rear wheel, characterised in that it comprises a load-bearing rigid narrow box-shaped or shell-shaped chassis (1) having at least one front transverse connection and one rear transverse connection (4, 5), sidewalls (3) and a flat chassis base (2) surrounding the driver in the form of a safety shell, the front wheels (21) on both sides of the chassis being situated in a distance to the sidewall of the chassis and are attached to the chassis, and in that it comprises a separate lightweight plastics body (11) which is connected to the chassis and which forms an aerodynamic slender outer shape covering all the wheels.

2. An electric vehicle according to claim 1, characterised in that the rear wheel is in the form of a double wheel (62).

3. An electric vehicle according to claim 1, characterised by a flat chassis base (2) which is not covered by the body.

4. An electric vehicle according to claim 1, characterised in that the maximum width of the chassis (1) is not more than 70̸ cm and the maximum width of the body (11) is not more than 110̸ cm.

5. An electric vehicle according to claim 1, characterised in that the wheels are disposed at the outermost edge of the body at the sides at the front and at the rear.

6. An electric vehicle according to claim 1, characterised in that the chassis tapers (8, 9) at least laterally at the sides and in that the chassis base rises forwardly after the style of a ski (H1).

7. An electric vehicle according to claim 1, characterised in that it comprises a roll bar (51) integrated into the chassis.

8. An electric vehicle according to claim 1, characterised in that those parts of the body which cover the chassis safety cell (1) have reinforcements (68, 69) and are connected to the chassis (76, 77).

9. An electric vehicle according to claim 1, characterised by a chassis of high-strength lightweight material, more particularly thermoplastics or thermosetting plastics reinforced with industrial endless fibres such as carbon, aramid or glass.

10. An electric vehicle according to claim 1, characterised in that the chassis comprises reinforcements (85) in the form of checkerwork integrated in plastics and consisting of unidirectional carbon strips.

11. An electric vehicle according to claim 1, characterised in that the chassis consists of a sandwich (47) of two high-strength top layers (48) with an interposed lightweight core (49), e.g. of foam or honeycomb material.

12. An electric vehicle according to claim 1, characterised in that the body (11) consists of aramid or glass-fibre reinforced thermosetting plastics or thermoplastics.

13. An electric vehicle according to claim 1, characterised in that the body (11) consists at least partially of a fibre-reinforced plastic sandwich with a supporting core.

14. An electric vehicle according to claim 1, characterised in that the body comprises two longitudinally divided lateral halves (12, 13), a cover (16) and a removable hood (14).

15. An electric vehicle according to claim 1, characterised in that the body comprises a drop-shaped basic member (12, 13) and a drop-shaped hood (14).

16. An electric vehicle according to claim 1, characterised in that the entry opening is formed by a hood (14) adapted to swing up to the rear and/or a forwardly opening cover part (16, 66), both of which are anchored on the chassis (76, 77).

17. An electric vehicle according to claim 1, characterised in that the entry opening is formed by a laterally swing-up hood (64) fixed on the chassis.

18. An electric vehicle according to claim 1, characterised in that the wheel suspensions and fittings (78, 79) situated outside the chassis have a lower strength than the chassis safety cell.

19. An electric vehicle according to claim 1, characterised in that the batteries (23) are disposed in the region of the front wheels on the chassis base (2) and are separated from the driver's interior by a wall (4, 39).

20. An electric vehicle according to claim 1, characterised by a plastics springing (33, 34), e.g. of polyurethane elastomers or unidirectional fibre composite material (57).

21. An electric vehicle according to claim 1, characterised by a multiple springing (33, 34, 35, 36) of the sub-masses comprising the chassis, battery and driver.

22. An electric vehicle according to claim 1, characterised by a steering means (24) situated beneath the driver's legs.

23. An electric vehicle according to claim 1 with a rear wheel drive, characterised in that the drive (41) forms a structural unit with a rear wheel swing arm (42) and a spring support (43).

24. An electric vehicle according to claim 1, characterised in that the two front wheels (21) are each driven by a motor.

25. An electric vehicle according to claim 1, characterised by an infinitely variable automatic torque converter drive (41).

26. An electric vehicle according to claim 1, characterised in that the outer shape has no injurious, hard or heavy parts in the direction of travel.

## Revendications

1. Automobile électrique à structure légère, comportant deux roues avant et une roue arrière, caractérisée en ce que le véhicule comporte un châssis (1) porteur rigide étroit, en forme de coquille ou de caisson, avec au moins une liaison transversale avant et une liaison transversale arrière (4, 5) des parois latérales (3) et un fond (2) de forme plate, le châssis enveloppant le conducteur en formant coquille de sécurité, en ce que les roues avant sont disposées des deux côtés du châssis, à une certaine distance latérale par rapport à la paroi latérale du châssis, et sont articulées sur le châssis, et en ce qu'une carrosserie légère, séparée, (11) en matière plastique est liée au châssis (1) et réalise une forme extérieure aérodynamique élancée et couvrant toutes les roues.

2. Automobile électrique suivant la revendication 1, caractérisée en ce que la roue arrière est réalisée sous la forme d'une roue double (62).

3. Automobile électrique suivant la revendication 1, caractérisée par un fond de châssis (2) plat, qui n'est pas recouvert par la carrosserie.

4. Automobile électrique suivant la revendication 1, caractérisée en ce que la largeur maximale du châssis (1) atteint au plus 70 cm et en ce que la largeur maximale de la carrosserie (11) atteint au plus 110 cm.

5. Automobile électrique suivant la revendication 1, caractérisée en ce que les roues sont disposées, à l'avant, latéralement et, à l'arrière, au bord extrême de la carrosserie.

6. Automobile électrique suivant la revendication 1, caractérisée en ce que le châssis (1) est réalisé, à l'avant, avec au moins un rétrécissement latéral (8, 9), et en ce que, vers l'avant, le fond du châssis remonte en forme de patin.

7. Automobile électrique suivant la revendication 1, caractérisée en ce qu'elle présente un arceau de sécurité (51) enveloppant, formant partie intégrante du châssis.

8. Automobile électrique suivant la revendication 1, caractérisée en ce que les pièces de la carrosserie recouvrant la cellule de sécurité du châssis (1) présentent des renforts (68, 69) et sont reliées au châssis en (76, 77).

9. Automobile électrique suivant la revendication 1, caractérisée par un châssis constitué de matériaux à haute résistance pour la structure légère, en particulier de résines durcissables ou thermodurcissables renforcées par des fibres techniques continues, comme du carbone, de l'aramide, du verre.

10. Automobile électrique suivant la revendication 1, caractérisée en ce que le châssis présente des renforts (85) en treillis, intégrés dans la matière plastique, constitués de bandes de carbone unidirectionnelles.

11. Automobile électrique suivant la revendication 1, caractérisée en ce que le châssis est constitué d'un sandwich (47) de deux couches de revêtement (48) avec un noyau léger (49) placé entre elles, par exemple en mousse ou en matériau en nid d'abeille.

12. Automobile électrique suivant la revendication 1, caractérisée en ce que la carrosserie (11) est constituée de résine durcissable ou thermodurcissable, renforcée par des fibres d'aramide ou de verre.

13. Automobile électrique suivant la revendication 1, caractérisée en ce que la carrosserie (11) est constituée, au moins en partie, d'un sandwich de matière plastique comportant un noyau de renforcement.

14. Automobile électrique suivant la revendication 1, caractérisée en ce que la carrosserie comporte deux demi-coquilles latérales séparées dans le sens longitudinal (12, 13), un capot (16) et un capotage (14) démontable.

15. Automobile électrique suivant la revendication 1, caractérisée en ce que la carrosserie comporte un corps de base (12, 13) en forme de goutte et un capotage (14) en forme de goutte.

16. Automobile électrique suivant la revendication 1, caractérisée en ce que l'ouverture d'entrée est constituée par un capotage (14) relevable vers l'arrière et/ou d'une partie de capot (16, 66) ouvrant vers l'avant, les deux étant ancrés en (76, 77) sur le châssis.

17. Automobile électrique suivant la revendication 1, caractérisée en ce que l'ouverture d'entrée est constituée par un capotage (64) fixé au châssis et relevable latéralement vers le haut.

18. Automobile électrique suivant la revendication 1, caractérisée en ce que les suspensions des roues et les pièces d'adaptation (78, 79) placées en dehors du châssis présentent une résistance plus faible que la cellule de sécurité du châssis.

19. Automobile électrique suivant la revendication 1, caractérisée en ce que les batteries (23) sont placées sur le fond du châssis (2), dans la zone des roues avant, et sont séparées par une paroi (4, 39) du volume intérieur destiné au conducteur.

20. Automobile électrique suivant la revendication 1, caractérisée par une suspension en matière plastique (33, 34), par exemple en élastomère de polyuréthanne ou en matériau composite unidirectionnel comportant des fibres (57).

21. Automobile électrique suivant la revendication 1, caractérisée par une suspension multiple (33, 34, 35, 36) des masses partielles, constituées par le châssis, la batterie et le conducteur.

22. Automobile électrique suivant la revendication 1, caractérisée par un guidon (24) placé en-dessous des jambes du conducteur.

23. Automobile électrique suivant la revendication 1, caractérisée en ce que l'entraînement (41), comportant une suspension de roue arrière (42) et un appui de ressort (43), constitue un unité de construction.

24. Automobile électrique suivant la revendication 1, caractérisée en ce que les deux roues avant sont entraînées chacune par un moteur.

25. Automobile électrique suivant la revendication 1, caractérisée par un entraînement à convertisseur de couple automatique en continu.

26. Automobile électrique suivant la revendication 1, caractérisée en ce que la forme extérieure ne présente, dans la direction de déplacement, aucune pièce dure ou lourde, pouvant causer des blessures.
